# EUROPEAN PATENT APPLICATION

(11) **EP 3 264 338 A1**
(43) Date of publication of application: **03.01.2018**
(21) Application number: 16464006.2
(22) Date of filing: 28.06.2016
(51) Int. Cl.: G06N 5/02, G06F 17/30

(54) **METHOD FOR PROVIDING A SEARCHABLE DATA BASE OF MODELS DESCRIBING TECHNICAL PROCESSES**

(71) Applicant: Siemens Aktiengesellschaft, 80333 München (DE)
(72) Inventor: TARNAUCA, Bogdan-Sorin, 500301 Brasov (RO); SASU, Lucian-Mircea, 500260 Brasov (RO); PUIU, Dan, 500481 Brasov (RO); NECHIFOR, Cosmin-Septimiu, 500289 Brasov (RO)
(74) Representative: Maier, Daniel Oliver

(57) **Abstract**

Method implemented in a computer system for providing a searchable data base of models describing technical processes, wherein the data base contains such models, a description of models and a description of inputs and outputs of the models, the method including the step of adding to each of a multitude of models of the data base a semantic description of the model, a semantic description of at least one input of the model and a semantic description of at least one output of the model, whereas the semantic description at least includes information about the technical nature of the input, the output and the model. This solution provides efficient descriptors and allows retrieval mechanisms to make use of a multitude of models describing technical processes and of related data.

## Description

### FIELD OF THE INVENTION

The present invention relates to a method implemented in a computer system for providing a searchable data base of models describing technical processes, wherein the data base contains such models, a description of models and a description of inputs and outputs of models. The present invention also relates to respective computer program code means and a respective knowledge base. Actual data values of inputs and outputs are normally not stored in the data base, however, the invention does not exclude to additionally store such values in the data base.

### STATE OF THE ART

A vast range of industrial applications, such as industrial control, condition monitoring, power generation, power transmission, transportation, etc., often rely on models for technical processes, both analytical models as well as predictive models, in order to perform efficient resource management and maintenance. These models can be seen as black boxes whose output is determined by values applied to the input and by the embedded logic of the model. The embedded logic can describe the behavior of a certain system through a set of mathematical relations or a statistical or machine learning hypothesis.

Analytical models are created by technical experts who have thorough technical knowledge of the process whose model is to be created. The resulting analytical relations are thus approximating the behavior of the process. In contrast to analytical models the predictive models are obtained based on a set of previously obtained data for process variables which data is fed into one or more statistical or machine learning algorithms. Such a predictive model is created by a data scientist with support of the technical expert of the respective technical domain. The data scientist prepares the training data, selects and parameterizes different algorithms and then validates the results. Both models are stateless which means that no state information is kept from one use of the model to the other. Both models will generate the same output whenever a given set of input data is applied to the model.

Knowledge management is a discipline that promotes an integrated approach to identifying, capturing, evaluating, retrieving, and sharing all of an enterprise's information assets, see Duhon, Bryant "It's all in our Heads." Inform 12.8 (1998), pages 8-13. So if one enterprise provides a variety of hardware and software products to its customers it also provides a wide range of knowledge management based services using an extensive amount of expertise and data collected from the solutions it deployed. Proper description of this data and of the resulting models is critical for efficient reuse and quick retrieval whenever past experience is considered relevant. Thanks to recently developed data processing solutions which rely on big data technology, additional information can be extracted from the existing data and models.

Current solutions often have limited capabilities regarding the joint description of the recorded data, processing algorithms and resulting models. The description is limited to metadata linked to actual data or to the models. The metadata usually contains values of a predefined set of attributes or a textual description regarding the data. This not only limits the description capabilities but also the ability to link together data which might be related. Poor linkage hinders information retrieval as well as its reuse - an experience of the "data rich and information poor syndrome".

It is also known to provide historical data or predictive models from different technical domains for free, for example UCI Machine Learning Repository, KNOEMA, Stanford Large Network Dataset Collection, Network Data Repository, to name just a few. In most of these cases, the dataset as well as the model descriptions consist only of a textual description which might include a general description of the dataset and the meaning of each feature and which usually is a column from a comma separated file. So these text files could be searched by using keywords if defined and supported by the data providers.

Currently there is no wide spread dataset description which can be used to describe datasets.

At enterprise level, that is in a certain company, such descriptions could be improved by using proprietary metadata formats and database support for persistence and retrieval.

When developing a machine learning model the experience of the data scientist, by selecting the learning algorithm, the model hyper parameters and the appropriate subset of features from the dataset, has a big impact on the performance of the resulting model. There are a number of initiatives which led to the creation of so called repositories where the data scientist can share his good or bad experience while developing prediction models. The repository can be used for storing the datasets used for training and testing, the name of the learning mechanism, the hyper parameters used and the results obtained during testing. MLRR (machine learning results repository, Brigham Young University, USA) or MLData (machine learning data set repository) are some examples of such repositories. Only a single repository (www.openml.org) is known to the inventors in which repository just machine learning serialized models are openly published allowing different ML researchers to share their results on specific data sets. All these repositories allow browsing through the previous experiences in training the models but there is no mechanism for indexing and searching based on model inputs/outputs of the technical domain of application.

Industrial enterprise systems are relying on business process models which represent process knowledge used for describing a certain behavior. There are various languages commonly used for the models such as: EPC (Event-driven Process Chain), BPMN (Business Process Modeling Notation), EEML (Extended Enterprise Modeling Language). Companies use private or public repositories for storing the business process models. APROMORE is an example for such a repository. In case of APROMORE there are various mechanisms used for discovering models based on the description of the fulfilling (sub)tasks, see "Efficient querying of large process model repositories", Tao Jin et al., Computers in Industry, Volume 64, Issue 1, January 2013, pages 41-49. Apart from selecting the fulfilling (sub)task, there is no mechanism of discovering models using the inputs/outputs description.

For analytical models the inventors have not been able to identify any repository that can persist such models and provide advanced retrieval capabilities.

### SUMMARY OF THE INVENTION

One object of the present invention is to provide efficient descriptors and allowing retrieval mechanisms to make use of a multitude of models describing technical processes and of related data. The knowledge bases of knowledge management systems shall be improved by extending the model and the associated data set description.

This is done by using the linked data paradigm provided through semantic technologies. Thus one can store and retrieve relations not only between models and the datasets but also relations with any other information assets which are semantically described.

According to the present invention the method implemented in a computer system for providing a searchable data base of models describing technical processes, wherein the data base contains such models, a description of models and a description of inputs and outputs of models, includes the step of adding to each of a multitude of models of the data base (especially to all models of the data base) a semantic description of the model, a semantic description of at least one input of the model and a semantic description of at least one output of the model, whereas the semantic description at least includes information about the technical nature of the input, the output and the model.

Semantic description, also known as semantic annotation, helps to bridge the ambiguity of the natural language when expressing notions and their computational representation in a formal language. By telling a computer how data items are related and how these relations can be evaluated automatically, it becomes possible to process complex filter and search operations. A normal annotation or tag only refers to attaching names, attributes, comments, descriptions, etc. to a data or to a model. It provides additional information (metadata) about an existing piece of data or model. Semantic description, however, enriches the unstructured or semi-structured data with a context that is further linked to the structured knowledge of a domain. Semantic description allows results that are not explicitly related to the original data.

If, for example, input data contain a text "rpm" and one searches for "rotational speed" one would not find this data. If, however, a semantical description has been added to the input data saying that "rpm" is data relating to the class "rotational speed" one would find this input data as result of the search for data or models referring to "rotational speed" even if "rotational speed" is not literally mentioned in this input data or its description.

One embodiment of the invention is therefore that the semantic description is based on an ontology of the technical domains of the models. In computer science and information science, an ontology is a formal naming and definition of the types, properties, and interrelationships of the entities that really or fundamentally exist for a particular domain of discourse. An ontology compartmentalizes the variables needed for some set of computations and establishes the relationships between them.

Information about the technical nature in the semantic description can include a technical domain and a technical sub-domain. So e.g. for a certain input data which is a rotational speed the technical domain could be "speed" and the sub-domain "rotational speed". For a model simulating a gas turbine the technical domain could be "turbine" and the sub-domain "gas turbine". Of course the information about the technical nature can include more levels of sub-classes, e.g. sub-sub-classes, or generally more classes or sub-classes of the same level, e.g. the model simulating a gas turbine can also have "temperature model" as class in its semantic description.

The semantic description can also include information which do not designate the technical nature, such as the owner of the data or model, the data source (e.g. which turbine was used to create data as a basis for a predictive model), the recording period (e.g. when the data of the turbine was measured) or a quality indicator. By way of this further semantic information the models or data can be linked to other information assets, internal or external, which are semantically annotated.

A specific embodiment of the invention provides for at least one model being an analytical model. For describing such an analytical model it usually is enough to describe the model itself, its input data and its output data.

Another specific embodiment of the invention provides for at least one model being a predictive model using historical data and a learning algorithm. In this case it is possible that also a semantic description of the historical data and/or of the learning algorithm is added.

For a predictive model not only the model itself, its input and output data are interesting for further use. It is also of relevance which historical data, both input and output, has been used to create the model and which learning algorithm has been trained with this historical data. In such a case the experience of the data scientist who has created the predictive model can also be of relevance for further use of the model. It is thus a further embodiment of the invention that the semantic description of the learning algorithm includes mathematical and technical information. So this information refers to specific technical details of the algorithm. Parts or all of this information can be added by a data scientist. These technical details can e.g. contain information about the convergence of the learning algorithm, the type of the used cost function, specific hyper parameter values of the training algorithms.

The present invention also comprises respective computer program code means which means are adapted to perform all the steps of the method according to the invention when the computer program is run on a computer for providing a searchable data base of models describing technical processes.

The present invention also comprises a knowledge base in the form of a computer system, for performing the method according to the invention, comprising a data base, wherein the data base contains models describing technical processes, wherein for a multitude of models there is a semantic description of at least one input of the model and a semantic description of at least one output of the model and at least a semantic description of the model.

The knowledge base can further comprise a semantic description user interface configured to add to each model of the data base a semantic description of the model, a semantic description of at least one input of the model and a semantic description of at least one output of the model, whereas the semantic description at least includes information about the technical nature of the input, the output and the model.

The knowledge base can further comprise a model retrieval user interface configured to search for models in the data base using search terms which are included in at least one semantic description of the inputs, the outputs or the model.

The method according to the invention provides a knowledge based system which allows enrichment of model's description and improves retrieval operations. The semantic annotations of the models, as well as of the datasets and of the utilized machine learning algorithms (in the case of predictive models) can be performed by using a certain ontology, either publicly available or custom built.

The main advantage of the system is that it enriches the description of the models and of the datasets and at the same time provides a multi-criteria search interface which reduces the time for finding these information assets.

The method according to the invention can e.g. be used for the technical domains of gas turbines, windmills, power generators, industrial processes or transportation systems.

### BRIEF DESCRIPTION OF FIGURES

The invention will be explained in closer detail by reference to a preferred embodiment, which is depicted schematically in the figures.
- Fig. 1: shows a diagram for adding a predictive model to a knowledge base according to the invention,
- Fig. 2: shows a diagram for adding an analytical model to a knowledge base according to the invention.

### WAYS TO IMPLEMENT THE INVENTION

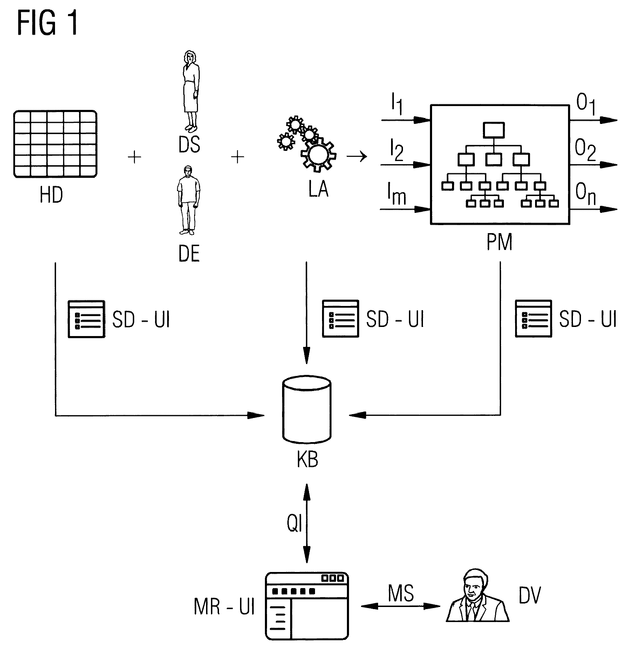

Fig. 1 shows the workflow to add a predictive model PM to a knowledge base KB. Based on historical data HD, a dataset is built and utilized by a data scientist DS, usually with the support of a domain expert DE in this technical domain, in order to produce a predictive model PM related to the observed technical process. A learning algorithm LA is used with hyper parameters which are adequate for the problem to be solved. The resulting model is then serialized, for instance as a PMML (Predictive Model Markup Language) file or a Java serialized object.

Besides storing the historical data HD used for the creation and validation of the predictive model PM as well as the model itself according to the invention a semantic description of the datasets (those of the historical data HD), of the learning algorithm LA and of the predictive model PM itself is created and stored in the knowledge base KB. Using a semantic description user interface SD-UI these information assets are described in a much richer manner than in traditional systems.

For the dataset of the historical data HD not only the name of the features (e.g. "rotation_speed") and their data types (e.g. number, text) are included. The semantic description contains the information about the feature meaning. E.g. a feature called "rotation_speed" is stored as double value, it indicates a name and it indicates the rotation speed of a turbine expressed in revolutions per minute, with possible values within the defined range. In traditional knowledge base systems this metadata might be present but often only as a textual description without proper retrieval support of data linkage.

Additional information about the dataset of the historical data HD, such as technical domain, technical sub-domains, owner, data source, recording period, quality indicators, etc. is also described semantically. It can thus be linked to other information assets (internal or external) which are semantically annotated.

The same approach is used when describing the resulting predictive model PM. The input I₁, I₂, ...Iₙ of the model, that is the variables necessary as input, and the output O₁, O₂, ... Oₙ of the model, that is the variables that will be delivered by the model, are semantically described. The model description is also linked to the original dataset of the historical data HD used to train and validate the model, as described above, and includes as well a description of the learning algorithm LA and its hyper parameters. The semantical description also specifies where the model is applicable, that is e.g. in which technical field and/or within which technical boundaries (e.g. for which turbine power, for which gas temperature).

All this knowledge is stored in a knowledge base KB which includes a persistence mechanism for the datasets and the models as well as a semantic store for their semantic description.

Once the datasets, the serialized models and their semantic description are stored into the knowledge base KB they can be used by solution developers DV. Developers DV can use a model retrieval user interface MR-UI, which is linked to the knowledge base KB via a query interface QI, in order to perform a model search MS or a search for datasets which meet their requirements. The search can look for exact matches or for models addressing similar problems. Once the candidate models are identified the solution developer DV can choose to download and use the models after their deserialization.

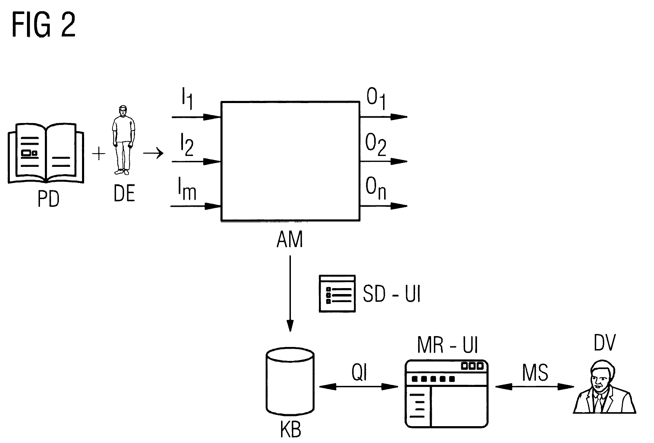

For analytical models AM the same pattern is followed, see Fig. 2, except that there is no need for a dataset of historical data HD and for a learning algorithm LA since the analytical model AM is generated by the domain expert DE of the respective technical domain based on a process description PD. The knowledge base KB allows storage of the semantic description of the analytical model AM via a semantic description user interface SD-UI. Semantic description is usually given by the domain expert DE. The knowledge base KB allows storage of the analytical model AM in a suitable programming language, such as Matlab or R, as well as its serialization, if available, e.g. in the programming languages Java or C# class.

Also in the case of analytical models the model retrieval user interface MR-UI is used by the solution developer DV to perform multi-criteria searches depending on the application requirements. The solution developer DV e.g. types a model search MS into the model retrieval user interface MR-UI which search is sent to the knowledge base KB via a query interface QI.

In both workflows of the Fig. 1 and 2 the retrieval functionality allows rich search queries based on semantic annotations of the respective model AM,PM. The solution developer DV is able to search for models having specific input and output parameters so that both the data type as well as the semantic type compatibility is guaranteed. Moreover, due to the extensive data linkage, the query mechanism benefits from the interference mechanisms of the semantic store thus extending the search capabilities beyond any classical metadata search engine.

The ability to search for appropriate models also facilitates model pipelining or chaining solutions in which the output of one model is fed to the input of another model or of a software component which both are semantically annotated. This allows the development of filtering and recommendations functions which only display to the user the modes and components suitable for chaining.

### LIST OF REFERENCE SIGNS

- AM: analytical model
- DE: domain expert
- DS: data scientist
- DV: developer
- HD: historical data
- I₁,I₂, ...In: Input
- KB: knowledge base
- LA: Learning algorithm
- MR-UI: model retrieval user interface
- MS: model search
- O₁,O₂, ... Oₙ: Output
- PD: process description
- PM: predictive model
- QI: query interface
- SD-UI: semantic description user interface

## Claims

1. Method implemented in a computer system for providing a searchable data base of models describing technical processes, wherein the data base contains such models, a description of models and a description of inputs and outputs of models, the method including the step of adding to each of a multitude of models of the data base a semantic description of the model, a semantic description of at least one input of the model and a semantic description of at least one output of the model, whereas the semantic description at least includes information about the technical nature of the input, the output and the model.

2. Method according to claim 1, wherein the semantic description is based on an ontology of the technical domains of the models.

3. Method according to claim 1 or 2, wherein information about the technical nature in the semantic description includes a technical domain and a technical sub-domain.

4. Method according to any of claims 1 to 3 wherein the semantic description contains one of the following items: owner, data source, recording period, quality indicator.

5. Method according to any of claims 1 to 4 wherein at least one model is an analytical model (AM).

6. Method according to any of claims 1 to 5 wherein at least one model is a predictive model (PM) using historical data (HD) and a learning algorithm (LA).

7. Method according to claim 6, the method including adding of a semantic description of the historical data (HD) and/or of the learning algorithm (LA).

8. Method according to claim 7 wherein semantic description of the learning algorithm (LA) includes mathematical and technical information.

9. Method according to any of claims 1 to 8, the method including the step of searching for models in the data base using search terms which are included in at least one semantic description of the input, the output or the model.

10. Method according to claim 9, the method including the step of feeding the output of a first model which has been found as a search result to a second model or another software component which has been found as a search result.

11. Computer program code means adapted to perform all the steps of any one of the preceding claims when the computer program is run on a computer for providing a searchable data base of models describing technical processes.

12. Knowledge base (KB) in the form of a computer system, for performing the method according to any of claims 1 to 10, comprising a data base, wherein the data base contains models describing technical processes, wherein for a multitude of models there is a semantic description of at least one input of the model and a semantic description of at least one output of the model and at least a semantic description of the model.

13. Knowledge base (KB) according to claim 12, further comprising a semantic description user interface (SD-UI) configured to add to each model of the data base a semantic description of the model, a semantic description of at least one input of the model and a semantic description of at least one output of the model, whereas the semantic description at least includes information about the technical nature of the input, the output and the model.

14. Knowledge base (KB) according to claim 12 or 13, further comprising a model retrieval user interface (MR-UI) configured to search for models in the data base using search terms which are included in at least one semantic description of the inputs, the outputs or the model.
